# EUROPÄISCHE PATENTSCHRIFT

(11) **EP 2 221 192 B1**
(45) Veröffentlichungstag und Bekanntmachung des Hinweises auf die Patenterteilung: **17.12.2014**
(21) Anmeldenummer: 10001866.2
(22) Anmeldetag: 24.02.2010
(51) Int. Cl.: B60B 5/02, B60B 27/02, F16D 41/36, B60B 27/04

(54) **Fahrradnabenbaugruppe mit einem Rotor, der eine Stirnverzahnung aufweist**
Bicycle component group with a rotor with front cogging
Composant de moyeu de vélo doté d'un rotor comportant une dentelure frontale

(30) Priorität: 24.02.2009 DE 102009010258
(43) Veröffentlichungstag der Anmeldung: 25.08.2010
(73) Patentinhaber: CarboFibretec GmbH, 88046 Friedrichshafen (DE)
(72) Erfinder: Wissler, Erhard, 73266 Bissingen/Teck (DE); Leschik, Thomas, 88046 Friedrichshafen (DE); Daum, Daniel, 88045 Friedrichshafen (DE)
(74) Vertreter: Winter, Brandl, Fürniss, Hübner, Röss, Kaiser, Polte - Partnerschaft mbB

(56) Entgegenhaltungen:
- WO-A1-00/19120
- DE-A1- 2 326 787
- GB-A- 2 334 765
- Winkler F., Rauch S.: "Fahrradtechnik", 31 December 1999 (1999-12-31), Bielefelder Verlagsanstalt, Bielefeld ISBN: 3-87073-131-1 pages 182-182,

## Beschreibung

Die Erfindung betrifft eine Fahrradnabenbaugruppe, mit einem zur Aufnahme zumindest eines Zahnrades ausgebildeten Rotor, der drehbar auf einer Achse angeordnet ist und mit einer axial verschieblichen Freilaufeinrichtung, über die in nur eine Rotationsrichtung um die Achse, Kraft vom Rotor auf einen Nabenkörper übertragbar ist, wobei der Rotor an seinem dem Nabenkörper zugewandten Ende eine Stirnverzahnung aufweist.

Aus dem Stand der Technik, etwa der DE 19629740 D4, sind Fahrradbauteile bekannt, die aus Faserverbundwerkstoffen gefertigt sind. Faserverbundwerkstoffe bieten den Vorteil, dass sie besonders leicht sind und eine hohe Steifigkeit, insbesondere gegen Biegung, aufweisen. Bauteile aus Faserverbundwerkstoffen, zu denen in Harz getränkte Kohlefaser, Glasfaser oder Aramidfaser zählen, können bedarfsgerecht ausgeformt werden. Unterschiedliche Querschnitte in einem Bauteil, Wanddicken und Oberflächenformen lassen sich durch entsprechend geschicktes Ausrichten der Fasern realisieren.

Ein Fahrrad, insbesondere ein hochwertiges Fahrrad, wie ein im Wettkampfbereich genutztes Rennrad, unterliegt einem besonderen Kostendruck, wobei diese Fahrräder besonders leicht und steif sein sollen. Diese Anforderung an Fahrräder trifft auch auf die Laufräder solcher Fahrräder zu. So werden in den letzten Jahren vermehrt Anstrengungen unternommen, um die Laufräder bzgl. ihres Eigengewichtes zu optimieren. Dies ist sogar bei Bergzeitrennen oder kupiertem Gelände von besonderer Bedeutung, da bei Reduktion des Eigengewichtes der Fahrradlaufräder die Trägheit des Gesamtsystems, insbesondere auch die Trägheit der bewegten Massen reduziert wird.

Allerdings ist darauf zu achten, dass eine Reduktion des Gewichts nicht auf Kosten der Steifigkeit geht, da sonst die vom Fahrradfahrer eingebrachte Energie in Verformungs- und Verwindungsarbeit gewandelt wird und nicht zum Zwecke des Vortriebes nutzbar ist. Es besteht somit schon länger die Anforderung, auch Fahrradlaufräder bei hoher Stabilität und Steifigkeit gewichtsmäßig zu reduzieren.

Die DE 202004008009 U1 offenbart hierfür als Lösung die Verwendung einer aus Faserverbundwerkstoff gefertigten Achse einer Fahrradnabenbaugruppe. Dabei werden Fahrradnabenbaugruppen für Hinterräder als auch für Vorderräder offenbart. Um die Abrasionsfestigkeit insbesondere im Bereich von Wälzlagern, die auf der Achse aufgesetzt sind, zu erhalten, geht die DE 202004008009 U1 den Weg, dass auf die Achse aus Aluminium gefertigte rotationssymmetrische separate Endansätze aufgesetzt werden. Die Lager sitzen dann auf diesen Endansätzen, nämlich im Bereich von dort ausgebildeten Lagerflächen.

Aus der EP 1 213 217 B1 und der DE 601 21 281 T2 ist eine mehrteilige Fahrradnabenbaugruppe bekannt. Dabei wird eine mehrteilige Achse verwendet. Zwei Teile der Achse werden über einen Schnellspanner, der abschnittsweise durch beide Achsenteile hindurchragt, verbunden. Die Trennungsebene zwischen den zwei Achsteilen ist gleichzeitig die Trennungsebene zwischen einem Rotor und einem Nabenkörper. Der Rotor greift in ein Zwischenelement ein, das mit einer Freilaufeinrichtung in Kontakt steht.

Benachbarter Stand der Technik ist auch aus der DE 199 15 436 C2 und der DE 198 28 009 A1 bekannt.

Aus dem Stand der Technik sind ähnliche Fahrradnabenbaugruppen bekannt, etwa aus der DE 2326787, der WO 00/19120, der GB 2334765 und der DE 94 19 357. Dabei offenbart die DE 2326787 eine Radnabe aus Kunststoff für ein Fahrrad, die WO 00/19120 einen Freilaufapparat für ein Fahrrad sowie ein diesbezügliches Verfahren und die GB 2334765 einen Fahrradfreilauf mit zwei stirnverzahnten Scheiben. Die DE 94 19 657 U1 offenbart eine Freilaufnabe für Zweiräder.

Ferner ist aus dem Buch Winkler F., Rauch S.: "Fahrradtechnik", 31.12.1999, Bielefelder Verlagsanstalt, Bielefeld, ISBN 3 - 87073 - 131 - 1 eine Hinterradnabe bekannt.

Leichtbaukomponenten für Fahrräder sind auch aus einem Prospekt der Firma Tune aus dem Jahre 1996 beschrieben. Insbesondere ist dort eine Karbonachse mit aufgeklebten metallischen Lagersitzen beschrieben.

Als nächstliegender Stand der Technik wird die DE 94 19 357 U1 angesehen.

Es ist die Aufgabe der vorliegenden Erfindung, bekannte Fahrradnabenbaugruppen weiter in Bezug auf Steifigkeit, Haltbarkeit und Gewicht zu optimieren.

Diese Aufgabe wird erfindungsgemäß dadurch gelöst, dass die Stirnverzahnung an einem vom Rotor radial abstehenden integralen Flansch ausgebildet ist. Auf diese Weise wird eine besonders leichte und gleichzeitig steife Fahrradnabenbaugruppe realisierbar, die auch noch besonders abriebsfest ist.

Vorteilhafte Ausführungsformen sind in den Unteransprüchen beansprucht und werden nachfolgend näher erläutert.

So ist es von Vorteil, wenn ein die Stirnverzahnung aufweisendes separates Element des Rotors form- und/oder stoffschlüssig mit diesem verbunden ist. Auf diese Weise lassen sich die dem Verschleiß unterliegenden Elemente aus verschleißfesterem Werkstoff herstellen, als der Rest des Rotors und in einem einfachen Verbindungsschritt miteinander lösbar oder unlösbar verbinden. Das erleichtert eine Vormontage und eine eventuell notwendige Reparatur.

Es ist von Vorteil, wenn der Rotor aus einem Faserverbundwerkstoff, einer Aluminiumlegierung oder einem Magnesiumkern mit einem Aluminium-, Titan-, oder Stahllegierungsbelag aufgebaut ist.

Um das Gewicht der Fahrradnabenbaugruppe zu optimieren ist es von Vorteil, wenn der Zahnkranz und/oder die Stirnverzahnung eine Metallbeschichtung auf der Oberfläche aufweist, oder einen Metalleinsatz aufweist. Die Beschichtung ist vorzugsweise nur abschnittweise aufgebracht, insbesondere nur am gesamten Außenumfang und/oder einer der Stirnflächen.

Besonders leicht und steif wird die Fahrradnabenbaugruppe, wenn die Fahrradnabenbaugruppe eine hohle Achse aus Faserverbundwerkstoff aufweist, an deren zumindest einem Ende ein Ausfallendengegenstück aufgesteckt ist und wobei auf der Achse zumindest ein Wälzlager positioniert ist und zwischen dem Wälzlager und der Achse eine von dem Ausfallendengegenstück separate Metallisierung aufgebracht ist. Auf diese Weise wird das Gewicht der Fahrradnabenbaugruppe weiter reduziert, ohne jedoch in Kauf nehmen zu müssen, dass selbst bei intensivem Betrieb der Fahrradnabenbaugruppe, etwa in einem im Wettkampf benutzten Rennrad, eine Abrasion auf der Oberfläche der hohlen Achse auftritt. Zusätzlich ist die Montage der Ausfallendengegenstücke, die vorzugsweise beidseitig auf den Enden der Achse aufgesteckt sind, vereinfacht.

Es ist auch von Vorteil, wenn die Metallisierung eine metallische Beschichtung ist. Eine solche Beschichtung kann im PVD-Verfahren (Physical Vapor Deposition-Verfahren), oder im CVD-Verfahren (Chemical Vapor Deposition-Verfahren) aufgebracht werden. Durch die Nutzung bekannter Verfahren, ist die Prozesssicherheit erhöht und wird nur ein hauchdünner Metallauftrag auf die Oberfläche der Achse vorgenommen. Dieser Auftrag von Metall kann so gering bzw. dünn sein, dass er lediglich einem Innenring eines Wälzlagers ausreichend Abriebfestigkeit entgegensetzt. Diese Metallisierung ist vorzugsweise nur im Bereich der Wälzlager vorgehalten, wodurch das Eigengewicht der Achse mit den dann weniger massiv ausstaltbaren Ausfallendengegenstücken optimiert ist.

Es ist auch in einer Variante von Vorteil, wenn die Metallisierung durch eine metallische Hülse ausgebildet ist. Solche Hülsen lassen sich besonders kostengünstig vorproduzieren und bei der Montage einfach an der Achse anbringen.

Dabei ist es von Vorteil, wenn die Hülse zumindest abschnittsweise plan zur Oberfläche der Achse, in diese eingearbeitet ist. Auf diese Weise lässt sich ein Lager einfach auf die Metallisierung aufschieben und positionieren, ohne dass hierfür aufwändige Werkzeuge zur Hand genommen werden müssten.

Die Positionierung der Wälzlager, unter Vermeidung von Beschädigungen der Achse, wird auch dann verbessert, wenn die Hülse zumindest an einer Schulter der Achse anliegt, wobei die Schulter durch eine plötzliche Außendurchmesservariation der Achse erzeugt ist.

Wenn die Hülse eine dem kleineren Außendurchmesserbereich zugewandte Seite der Schulter abdeckt, so wird ein Eindringen des Innenringes des Wälzlagers in den Faserverbundwerkstoff bei axial eingeleiteten Kräften vermieden. Dies erhöht die Lebensdauer und vermindert den Ausfall einer erfindungsgemäßen Fahrradnabenbaugruppe.

Die Montage lässt sich dann besonders einfach und schnell durchführen, wenn die Hülsen in Nuten der Achse eingepresst und/oder eingeklebt sind.

Es ist ferner von Vorteil, wenn die Achse eine konstante Wandstärke aufweist. Auf diese Weise lassen sich hohe Biegesteifigkeitswerte erreichen, wobei durch entsprechende Wahl des Außendurchmessers die absolute Belastung besonders hoch sein kann. Je größer der Außendurchmesser der Hohlachse gewählt wird, desto höhere Biegesteifigkeitswerte lassen sich erreichen.

Es hat sich in einer Variante als vorteilhaft herausgestellt, wenn entlang einer Rotationsachse diese Achse eine konstante Querschnittsfläche orthogonal zur Rotationsachse aufweist. Es ist dabei allerdings genau der Bereich ausgenommen, an dem die Achse einen Außendurchmessersprung aufweist. Genau in diesem durch die Wandstärke der Achse bestimmten Sprungbereich liegt logischerweise eine größere Querschnittsfläche vor.

Um die Fahrradnabenbaugruppe besonders einfach in einem Hinterbau, und dort in den Ausfallenden, positionieren zu können, ist es von Vorteil, wenn das Ausfallendengegenstück einen Innenring eines Wälzlagers auf die an der Seite der Schulter anliegende Hülse drängt, wobei der Innenring auf einem zylindrischen Abschnitt der Hülse aufsitzt. Dadurch wird, beim Einbau eines die Fahrradnabenbaugruppe enthaltenden Fahrradlaufrades in den Rahmen oder die Gabel eines Fahrrades zusätzlich die Positionierung des Wälzlagers gesichert.

Um Relativbewegungen der Einzelelemente zueinander zu gewährleisten, ist es von Vorteil, wenn ein Rotor konzentrisch zur Achse, diese umgebend, auf zwei Wälzlagern, gelagert ist. Durch die Verwendung eines Rotors können auch Ritzelpakete oder einzelne Ritzel in Form von Zahnrädern auf den Rotor aufgebracht werden, so dass über einen Kettenantrieb die Fahrradnabenbaugruppe in Drehung versetzbar ist.

Als besonders vorteilhaft hat es sich in Versuchen herausgestellt, wenn ein mehrteiliger Nabenkörper auf zwei die Achse umgebenden Wälzlagern, die Achse umgebend, relativ zu ihr drehbar gelagert ist, wobei ein Innennabenkörper des Nabenkörpers aus Verbundwerkstoff und ein Außennabenkörper des Nabenkörpers aus metallischem Werkstoff gefertigt ist. Das Gewicht lässt sich dadurch weiter reduzieren und die aufzufangenden Kräfte durch bedarfsgerecht ausgelegte Komponenten ableiten.

Besonders stabil ist ein Ausführungsbeispiel dann, wenn sich der Innennabenkörper im Wesentlichen entlang der gesamten Innenseite des Außennabenkörpers erstreckt.

Besonders leicht lässt sich eine Fahrradnabenbaugruppe ausgestalten, wenn der Innennabenkörper durch eine zwischen den den Nabenkörper stützenden Wälzlagern angeordnete Unterbrechung zweigeteilt ist.

Es ist von Vorteil, wenn eine erste, eine Stirnverzahnung aufweisende Zahnscheibe des Rotors mit einer zweiten, eine Stirnverzahnung aufweisenden Zahnscheibe, welche entlang einer Längsachse der Fahrradnabenbaugruppe relativ zu dem Nabenkörper verschieblich positioniert ist, mit ihr in kraftübertragenden Kontakt geratbar angeordnet ist.

Auch ist es von Vorteil, wenn die erste Zahnscheibe eine Vielzahl von Zähnen, vorzugsweise nach Art von Sägezähnen aufweist, wobei eine Ebene, in der die Zahngrundlinie der Zähne vorhanden ist, senkrecht zur Längsachse der Achse, gegenüber welcher die erste Zahnscheibe rotierbar angeordnet ist, verläuft und deren Zahnkopflinie quer zu der Ebene verläuft, wobei die zweite Zahnscheibe eine Vielzahl von Zähnen, vorzugsweise nach Art von Sägezähnen aufweist, deren Zahnkopflinie parallel zur Längsachse verläuft und deren Zahngrundlinie quer dazu verläuft.

Ein weiterer Vorteil stellt sich ein, wenn sich die einander zugewandten Zahnoberflächen zu 85% bis vorzugsweise 100% beim Ineinandergreifen der Zähne der beiden Zahnscheiben berühren. Dies kann auch alternativ oder kummulativ zu einer balligen, d.h. konvexen Ausgestaltung der Zahnoberflächen der zweiten Zahnscheibe und/oder in besonderen Fällen der ersten Zahnscheibe geschehen. Auf diese Weise lässt sich eine effiziente Klauenkupplung realisieren.

Ferner ist es von Vorteil, wenn die zweite Zahnscheibe eine Profilierung nach Art einer Geradverzahnung auf der Außenseite aufweist und/oder die Profilierung in einem im Nabenkörper wechselbar befestigten, vorzugsweise geschraubten, Zahnring in Längsrichtung beweglich gelagert ist, wobei der Zahnring aus härterem Material als der Rotor und die erste Zahnscheibe gefertigt ist. Der Zahnring agiert dabei als Führungsring für die zweite Zahnscheibe, um ein Ein- und Ausrücken der jeweiligen Zähne zu gewährleisten.

Die Erfindung betrifft auch ein Fahrrad mit einem Hinter- und/oder einem Vorderrad, in das/die eine Fahrradnabenbaugruppe gemäß der Erfindung eingebaut ist. Auf diese Weise lässt sich ein besonders kompetitives Fahrrad herstellen und vertreiben.

Die Erfindung wird nachfolgend mit Hilfe einer Zeichnung näher erläutert.

Es zeigen:
- Fig. 1: eine erste Ausführungsform einer erfindungsgemäßen Fahrradnabenbaugruppe mit einem dreiteiligen Nabenkörper,
- Fig. 2: eine zweite Ausführungsform einer erfindungsgemäßen Fahrradnabenbaugruppe mit einem zweiteiligen Nabenkörper,
- Fig. 3: eine dritte Ausführungsform einer erfindungsgemäßen Fahrradnabenbaugruppe mit einem dreiteiligen Nabenkörper, wobei jedoch eine Scheibe an einem Ende der Achse zur Lagesicherung eines achsauβenseitig angeordneten Wälzlagers angebracht ist,
- Fig. 4: eine vierte Ausführungsform der erfindungsgemäßen Fahrradnabenbaugruppe, die einen zweiteiligen Nabenkörper aufweist, wobei wie in dem in Fig. 3 dargestellten Ausführungsbeispiel, ein achsendseitiges Lager durch eine in einen Innennabenkörper einschraubbare Scheibe lagegesichert ist,
- Fig. 5: eine perspektivische Teilansicht eines stirnverzahnten Rotors,
- Fig. 6: eine mit der Stirnverzahnung des Rotors aus Fig. 5 in Formschluss gelangbare Zahnscheibe,
- Fig. 7: einen Zahnring in perspektivischer Darstellung, der mit der Zahnscheibe in Formschluss bringbar ist,
- Fig. 8: eine perspektivische Darstellung einer alternativen Zahnscheibe, die Durchgangslöcher aufweist und
- Fig. 9: einen Querschnitt durch den Rotor entlang einer Längsachse.

Die Figuren sind lediglich schematischer Natur und dienen nur dem Verständnis der Erfindung. Für die gleichen Elemente werden dieselben Bezugszeichen verwendet.

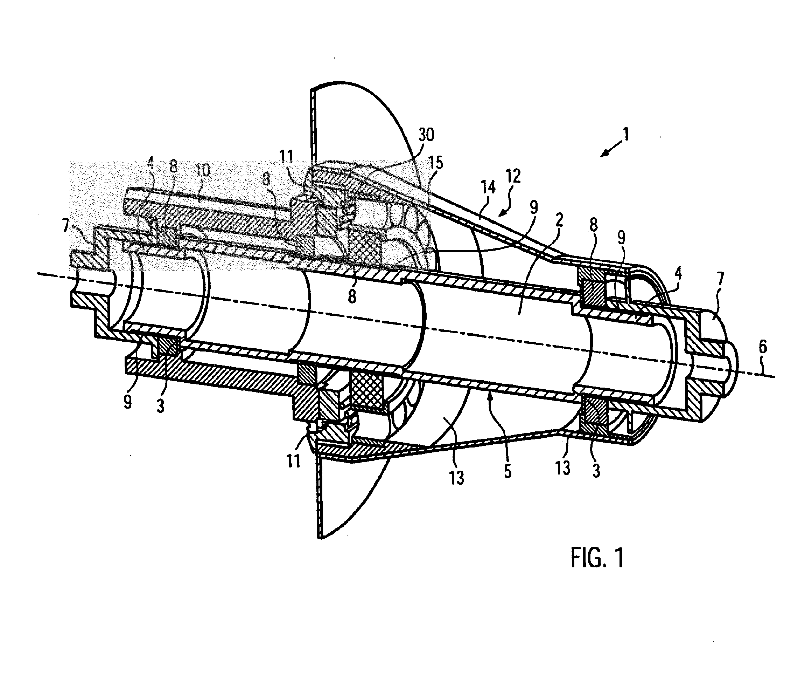

Fig. 1 ist eine schematische Schnittansicht eines ersten Ausführungsbeispieles einer erfindungsgemäßen Fahrradnabenbaugruppe 1. Dieses erste Ausführungsbeispiel weist eine hohle Achse 2 auf. Die Achse 2 weist mehrere zylindrische Abschnitte auf, wobei jeder Abschnitt einen anderen Außendurchmesser aufweist. In den Übergangsbereichen von einem Außendurchmesser zum nächsten Außendurchmesser ist jeweils eine Schulter 3 ausgebildet.

Die Achse weist zwei Enden 4 auf. Die Enden 4 weisen einen kleineren Außendurchmesser auf, als er in einem mittigen Bereich 5 der Achse 2 vorhanden ist.

Die Wandstärke der Achse 2 ist an allen Stellen gleich groß und bleibt entlang einer Rotationsachse 6 konstant.

Auf die Enden 4 sind Ausfallendengegenstücke 7 aufgeschoben.

Während die Achse 2 aus Faserverbundwerkstoff gefertigt ist, sind die Ausfallendengegenstücke 7 aus einem metallischen Werkstoff, bspw. aus Leichtmetall oder einer Leichtmetalllegierung gefertigt. Als probates Material haben sich Titan- , Aluminium-, Magnesium- oder sog. Titanallegierungen bewährt. Die Achse 2 aus Faserverbundwerkstoffen ist im Wesentlichen aus Glas-, Aramid- und/oder Kohlefaser in einem Harzbett ausgebildet.

Zwischen den Schultern 3 und den Ausfallendengegenstücken 7, im Bereich der Enden 4, sind Wälzlager 8 angeordnet. Auch in dem mittigen Bereich 5 sind zwei Wälzlager 8 angeordnet.

Die Wälzlager 8 sind als Kugel-, Rollen-, Tonnen- oder Zylinderwälzlager ausgebildet. Die Wälzlager 8 weisen jeweils einen Innen- und einen Außenring auf. Der Innenring ist durch eine Metallisierung 9 am direkten Kontakt mit der Oberfläche der Achse 2 gehindert. Die Metallisierung 9 kann entweder als Beschichtung ausgebildet sein, oder als separate Hülse, die oberflächenplan in die Achse 2 eingesetzt ist.

Die Metallisierung 9 ist auch zwischen der Oberfläche der Achse 2 und dem Ausfallendengegenstück 7 angeordnet.

In dem mittigen Bereich 5, in dem die inneren zwei Wälzlager 8 angeordnet sind, erstreckt sich eine durchgehende Metallisierung 9 von einem Innenring des einen Wälzlagers zum anderen Innenring des anderen Wälzlagers. In diesem Bereich ist auch eine sich nach innen erstreckende Nut der Achse 2 ausgebildet. Die Oberfläche der Achse 2 ist im mittigen Bereich 5 plan, so dass entlang der gesamten Achse 2 nur zwei unterschiedliche Außendurchmesserwerte an der Oberfläche anliegen.

Die Ausfallendengegenstücke 7 weisen eine im Wesentlichen rotationssymmetrische Form auf, die achsfern in Zylinderabschnitte übergehen, die an Schlitze in den Ausfallenden eines Hinterbaus eines Fahrrades oder Gabelenden einer Gabel eines Fahrrades angepasst sind, um die Fahrradnabenbaugruppe an der Gabel oder dem Hinterbau zu fixieren. Zu diesem Zweck ist ein nicht dargestellter Schnellspanner durch die hohle Achse 2 und die hohl ausgestalteten Ausfallendengegenstücke 7 durchführbar.

Die in Fig. 1 dargestellten linken zwei Wälzlager 8 lagern einen Rotor 10. Der Rotor 10 ist daher relativ zur Achse 2 um die Rotationsachse 6 herum drehbar. Eine Freilaufeinrichtung 11 hindert ihn, relativ zu einem Nabenkörper 12, an Rotation in die eine Richtung und ermöglicht eine Rotation in die andere Richtung. D.h., bei Rotationen des Rotors 10 in eine Richtung wird der Nabenkörper 12 nicht in Bewegung versetzt, wohingegen eine Rotation des Rotors 10 in die andere Richtung den Nabenkörper 12 mitnehmend in Bewegung versetzt. Der Nabenkörper 12 ist in dem in Fig. 1 dargestellten Ausführungsbeispiel grundsätzlich dreiteilig aufgebaut und weist einen zweigeteilten Innennabenkörper 13 und einen einteiligen Außennabenkörper 14 auf.

An dem in Fig. 1 dargestellten linken, den Nabenkörper 12 tragenden Wälzkörper 8, ist mit diesem Wälzlager 8 ein in kraftübertragender Verbindung befindliches Zwischenstück 15 ausgebildet. Das Zwischenstück 15, wie auch der Innennabenkörper 13 ist aus Leichtmetall, insbesondere einer Aluminium-, Titan- oder Magnesiumlegierung gefertigt. Der Außennabenkörper 14 hingegen ist aus Faserverbundwerkstoff, wie Kohlefaser enthaltenem Harz, gefertigt. Statt Kohlefaser lassen sich auch Glasfaser oder Aramidfaser verwenden.

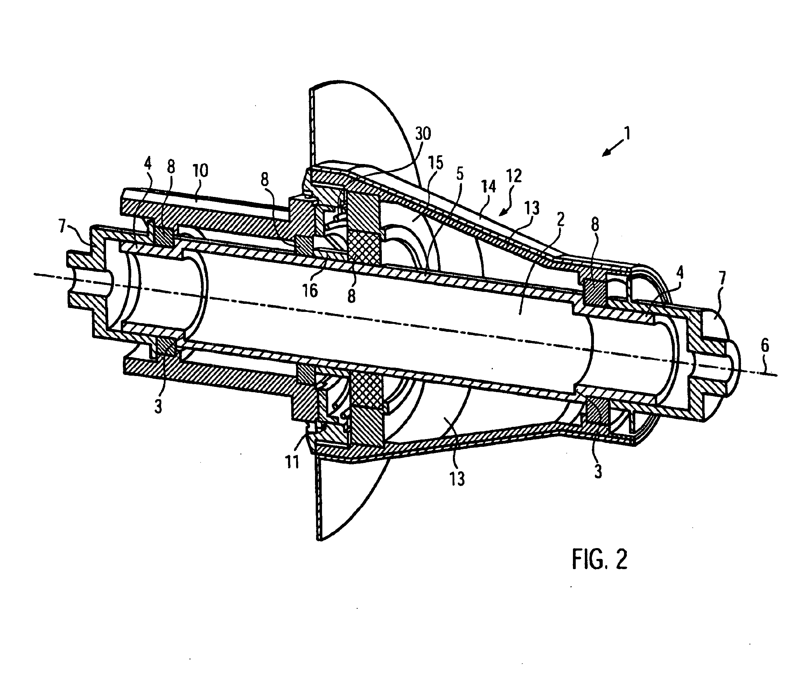

Das in Fig. 2 dargestellte Ausführungsbeispiel ist insbesondere in Bezug auf den Nabenkörper 12 und ein zwischen den inneren beiden Wälzlagern 8 angeordneten Distanzring 16 unterschiedlich zu dem ersten Ausführungsbeispiel. In dem dargestellten Ausführungsbeispiel nach Fig. 2 ist die Metallisierung 9 aufgrund ihrer geringen Dünne nicht dargestellt.

Es kann allerdings auch als Ersatz der Achse 2 aus Faserverbundwerkstoff mit der Metallisierung 9, auch eine Achse 2 aus Metall, insbesondere eine aus Leichtmetall, wie Aluminium und/oder Magnesium, verwendet werden.

Es dehnt sich der Innennabenkörper 13 von einem ersten Wälzlager 8 durchgehend zu einem zweiten Wälzlager 8 aus.

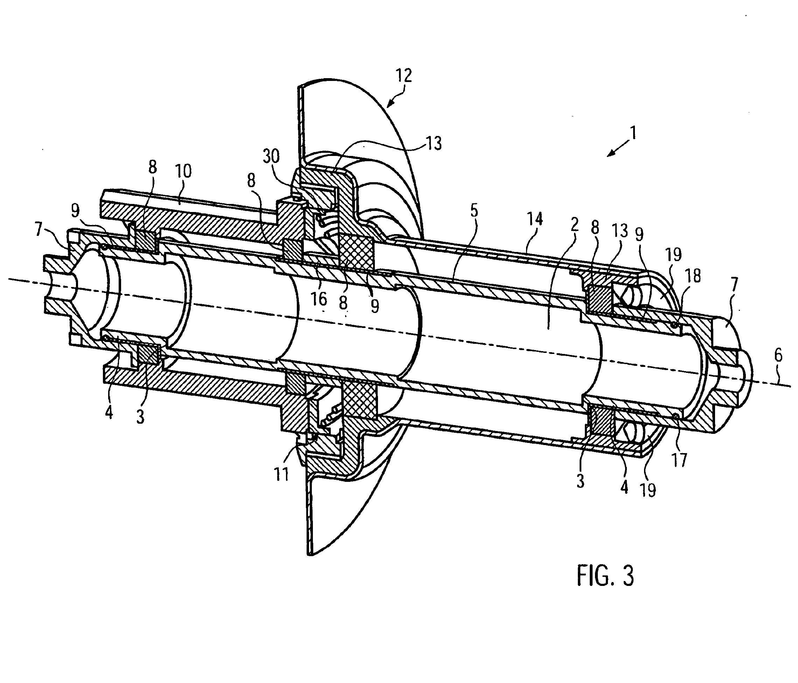

Im Unterschied zu dem Ausführungsbeispiel gemäß der Fig. 1, weist das dritte Ausführungsbeispiel, wie es in Fig. 3 dargestellt ist, einen zusätzlichen Distanzring 16 zwischen den inneren beiden Wälzlagern 8 auf. Während sich in der Variante gemäß der Fig. 1 und 2 der Nabenkörper 12 zwischen den nabenkörperseitigen Wälzlagern 8 im Wesentlichen konisch erstreckt, erstreckt sich der Nabenkörper 12 im Ausführungsbeispiel 3 und 4 im Wesentlichen zylindrisch.

Der Nabenkörper 12 weist dabei mehrere Zylinderabschnitte unterschiedlichen Durchmessers auf, wobei jeweils in einem relativ kleinen Bereich konische Übergänge vorhanden sind. Zwischen den beiden nabenkörperseitigen Wälzlagern 8 ist der Nabenkörper 12 jedoch im Wesentlichen zylindrisch ausgebildet.

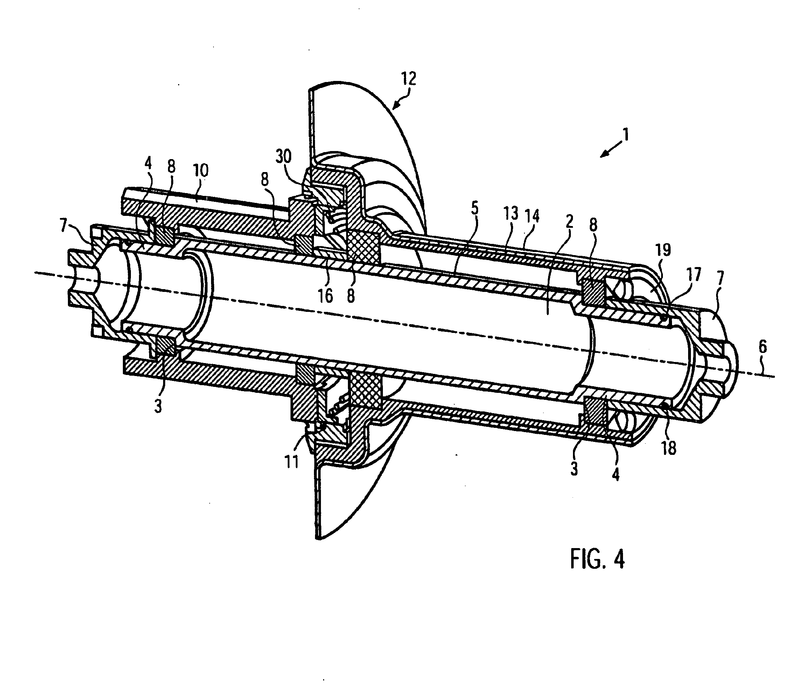

Auch in dem in Fig. 4 dargestellten Ausführungsbeispiel ist ein Distanzring 16 zwischen den inneren beiden Wälzlagern 8 angeordnet und ist der Nabenkörper 12 im Wesentlichen zylindrisch, zumindest in dem Bereich zwischen den nabenkörperseitigen Wälzlagern 8 ausgebildet.

Das nabenkörperseitige Ende der Achse 2 weist an dem dort kleineren Außendurchmesser, verglichen mit dem mittigen Bereich 5 der Achse 2, eine umlaufende Nut 17 auf. In dieser Nut 17 ist ein Rückhaltemittel, wie ein O-Ring 18 eingesetzt. Der O-Ring 18 weist dabei einen Innendurchmesser auf, der unwesentlich kleiner als der Innendurchmesser der Nut 17 ist. Dadurch sitzt der aus elastischem Material gefertigte O-Ring 18 straff auf dem nabenkörperseitigen Ende 4 der Achse 2 auf.

Dieser O-Ring 18 dient als Lagesicherung zu dem auf diesen aufgeschobenen Ausfallendengegenstück 7. Das Ausfallendengegenstück 7 kann im Bereich des O-Rings 18 eine weitere nicht dargestellte Nut aufweisen, um ein Verrasten des Endes 4 der Achse 2 mit dem Ausfallendengegenstück 7 durch den O-Ring 18 zu erreichen. Der Außendurchmesser des O-Rings 18 ist unwesentlich kleiner als der Durchmesser der in das Ausfallendengegenstück 7 eingebrachten Nut.

Eine weitere Lagesicherung ist für die Achse 2 und insbesondere für das Wälzlager 8 achsendseitig im Bereich des Nabenkörpers 12 angeordnet. Dieselbe Scheibe 19, wie sie auch in dem Ausführungsbeispiel gemäß Fig. 3 verwendet wurde, wird auch im Ausführungsbeispiel gemäß Figur 4 verwendet und weist zumindest zwei Öffnungen in ihrer Oberfläche auf, damit ein Werkzeug eingreifen kann und die Scheibe 19 in ein Innengewinde des Innennabenkörpers 13 einschraubbar ist.

Die Scheibe 19 ist bis zur Anlage an das nabenkörperaußenseitige Wälzlager 8 einschraubbar und stellt eine Lagesicherung dar.

Zwischen dem inneren Scheibenrand der Scheibe 19 und der zylindrischen Außenoberfläche des Ausfallendengegenstücks 7 ist ein kleiner Spalt vorgesehen, um Relativbewegungen zwischen der Scheibe und dem Ausfallendengegenstück 7 zu ermöglich. Statt der Scheibe 19 lassen sich auch herkömmliche Sprengringe verwenden.

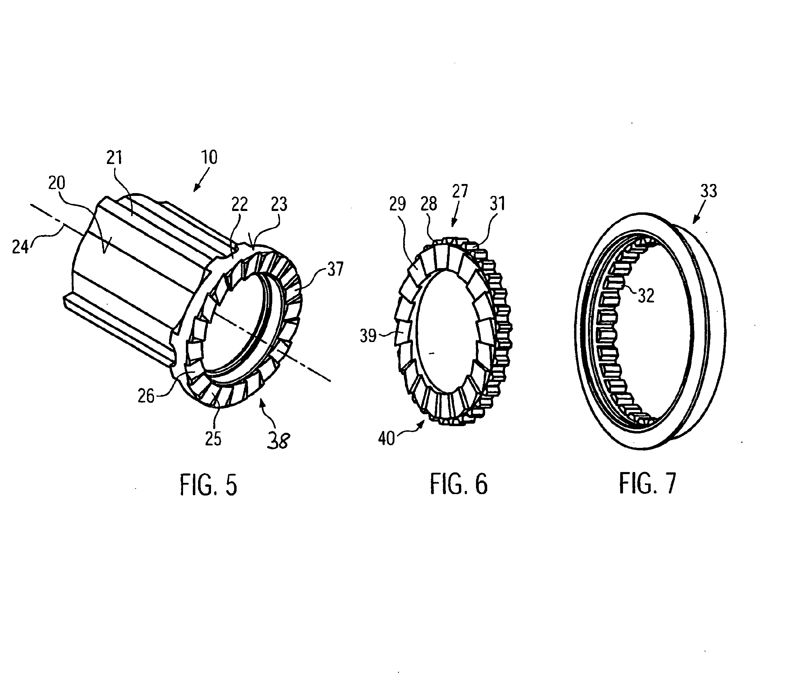

In Fig. 5 ist ein in perspektiver Ansicht dargestellter separater Rotor 10 visualisiert. Der Rotor 10 weist auf seiner grundsätzlich zylindrischen Oberfläche 20 ein Keilprofil 21 auf. Auf dieses Keilprofil 21 ist zumindest ein Zahnkranz aufsteckbar und fixierbar.

Der Zahnkranz ist nicht dargestellt, kann jedoch auch Teil eines Ritzelpaketes sein. Über einen solchen Zahnkranz ist mittels einer Kette Kraft auf den Rotor 10 übertragbar.

Der Rotor 10 weist einen radial abstehenden Flansch 22 auf. Der Flansch 22 ist mit einer zylindrischen Außenoberfläche 23 versehen. Der Rotor 10 weist eine Längsachse 24 auf. Die Längsachse 24 ist auch die Symmetrie- und Rotationsachse des Rotors 10. Ist der Rotor 10 in die Fahrradnabenbaugruppe 1 eingebaut, so ist diese Längsachse 4 identisch zu der Rotationsachse 6.

Der Flansch 22 weist auf der dem Nabenkörper 12 im eingebauten Zustand zugewandten Seite ein mehrzahnartiges Profil 25 auf. Das Profil 25 ist durch eine Stirnverzahnung gebildet. Die Stirnverzahnung ist in den Flansch 22 des Rotors 10 eingebracht. Die Stirnverzahnung weist Gleitflächen 26 auf, die schräg zu einer Teilungsebene stehen, welche orthogonal zur Längsachse 24 ausgerichtet ist. Die Gleitflächen 26 der ersten Zahnscheibe 38 sind in zwei Richtungen, relativ zur Längsachse 24, verkippt.

Die Stirnverzahnung des Profils 25 gelangt im verbauten Zustand des Rotors 10 in der Fahrradnabenbaugruppe 1 mit einer Zahnscheibe 27 in Eingriff. Diese Zahnscheibe ist auch als zweite Zahnscheibe 40 bezeichnet, wohingegen ein mit einer Stirnverzahnung versehene Abschnitt des Rotors 10 als erste Zahnscheibe 38 bezeichnet wird.

Dabei weist die Zahnscheibe 27 auf der dem Rotor 10 zugewandten Seite eine an die Stirnverzahnung des Rotors 10 angepasste Stirnverzahnung 28 auf. Die Stirnverzahnung 28 ist jedoch nicht identisch zu der Stirnverzahnung des Profils 25. Die Stirnverzahnung 28 weist ebenfalls Gleitflächen auf, die als Gegengleitflächen 29 im eingebauten Zustand an den Gleitflächen 26 entlanggleiten. Dazu ist im eingebauten Zustand die Zahnscheibe 27 in Richtung der Rotationsachse 6 mittels einer Feder 30 verschiebbar. Während des Verschiebens ist die Zahnscheibe 27 über eine radial abstehende Profilierung 31 geführt. Die Profilierung 31 weist ein Zahnwellenprofil auf und ist am Umfang der Zahnscheibe 27 ausgebildet.

In das Zahnwellenprofil der Profilierung 31 greift formschlüssig eine zahnwellenartige Verzahnung 32 eines Zahnringes 33 ein, wie er in Fig. 7 dargestellt ist. In einem besonderen Ausführungsbeispiel wird die Zahnscheibe 27 mittels einer als Schraubenfeder ausgebildeten Feder 30 innerhalb des Zahnringes 33 hin und her geschoben, wodurch die Stirnverzahnung 28 der Zahnscheibe 27, je nach Position, mit dem Profil 25 in Formschluss befindlich ist oder dieser Formschluss aufgelöst ist. Der Formschluss ist jedoch nur aufgelöst, wenn kurzzeitig der Rotor 10 mit seinen Gleitflächen 26 über die Gegengleitflächen 29 gleitet. Bei Rotation des Rotors 10 in die eine Richtung wird die Zahnscheibe 27 somit mitrotiert und bei Rotation des Rotors 10 in die andere Richtung wird die Zahnscheibe 27 nicht mitgenommen. Während dieses Durchrutschens wird die Zahnscheibe 27 von dem Rotor 10 weggedrückt und bewegt sich entlang der Längsachse 24 innerhalb des Zahnringes 33. Sobald die Zahnscheibe 27 wieder in Eingriff in puncto des Ineinanderfassens der an dem Rotor 10 und der Zahnscheibe 27 ausgebildeten Vorsprünge gelangbar ist, drückt die Feder 30 die Zahnscheibe 27 wieder auf den Rotor 10 in Eingriff.

Als Werkstoff für den Rotor 10 haben sich Aluminiumlegierungen, Magnesiumlegierungen, Keramik und Kunststoff bewährt. Insbesondere hat sich als Beispiele für Kunststoff Faserverbundwerkstoffe, wie in Harz eingebettete Kohlefaser, Aramidfaser und Glasfasern bewährt. Auch Kombinationen dieser einzelnen Werkstoffe sind möglich. Es ist auch möglich Einsätze aus Metall, insbesondere aus Stahl im Bereich des Profils 25, der Stirnverzahnung 28 und der Profilierung 31 sowie der Verzahnung 32 zu verwenden.

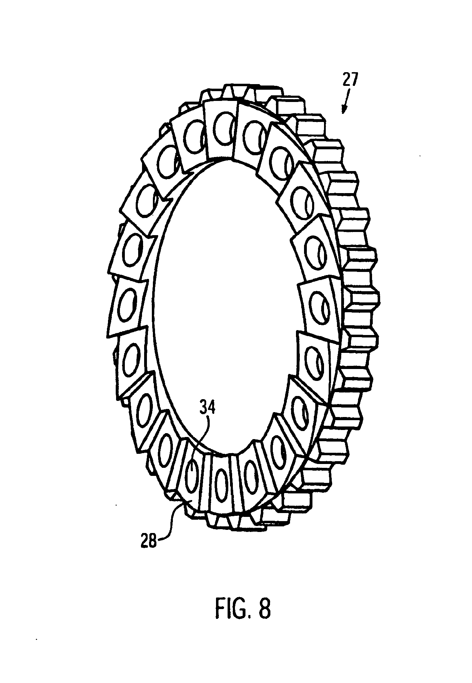

Aus Gewichtreduzierungsgründen hat es sich, wie in Fig. 8 dargestellt, auch bewährt, wenn in die Gleitflächen 28 Öffnungen eingebracht sind. Diese Öffnungen sind mit dem Bezugszeichen 34 versehen. Die Öffnungen 34 sind als Durchgangslöcher per Bohrung in den Zahnring 33 eingebracht. Für eine solche Ausgestaltung hat sich bewährt, wenn der Zahnring 33 aus Stahl gefertigt ist, da er besonders verschleißfest ist. Als Gegenpart wird dann der Rotor 10 aus einem gewichtsmäßig leichteren aber weicheren Werkstoff, wie etwa Leichtmetall oder Faserverbundwerkstoff gefertigt. Im Verschleißfall muss somit lediglich der als Komplettrotor ausgebildete Rotor 10 gewechselt werden.

Es ist auch möglich, den Rotor 10 nicht nur mit einer Stirnverzahnung zu versehen, sondern auch das Zahnrad integral mit dem Rotor 10 auszubilden. Dazu ist es von Vorteil, wenn die Zahnräder eine metallische Beschichtung aufweisen, insbesondere, wenn der Gesamtrotor mit dem Zahnkranz aus Leichtmetall oder Kohlefaserverbundwerkstoff gefertigt ist.

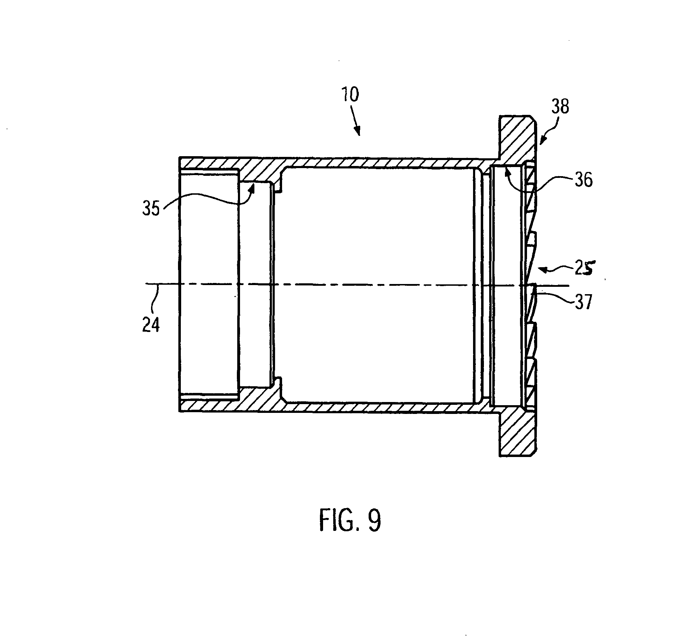

In Figur 9 sind zwei Lagersitze 35 und 36 erkennbar, welche die Außenringe von Wälzlagern 8 aufnehmen. Auch ist die durch die Profilierung 25 gebildete sägezahnartige Stirnverzahnung des Rotors 10 angedeutet. Die Zähne 37 sind dabei so um einen nicht dargestellten Winkel β verkippt, dass beim Zusammenwirken der Zähne 37 der ersten Zahnscheibe 38, hier also des Rotors 10, mit den Zähnen 39 der zweiten Zahnscheibe 40, eine zusätzliche Schließkraft F_{S} erzeugt wird, die den Form- und Kraftschluss zwischen den jeweiligen Zähnen 37 und 39 unterstützt.

## Patentansprüche

1. Fahrradnabenbaugruppe (1) mit einem Rotor (10), der drehbar auf einer Achse (2) angeordnet ist und mit einer axial verschiebbaren Freilaufeinrichtung (11), über die in nur eine Rotationsrichtung um die Achse (2) Kraft vom Rotor (10) auf einen Nabenkörper (12) übertragbar ist, wobei der Rotor (10) an seinem dem Nabenkörper (12) zugewandten Ende eine Stirnverzahnung aufweist, **dadurch gekennzeichnet, dass** die Stirnverzahnung an einem vom Rotor (10) radial abstehenden integralen Flansch (22) ausgebildet ist.

2. Fahrradnabenbaugruppe (1) nach Anspruch 1, **dadurch gekennzeichnet, dass** eine erste, eine Stirnverzahnung aufweisende Zahnscheibe (38) des Rotors (10) mit einer zweiten, eine Stirnverzahnung aufweisende Zahnscheibe (40), welche entlang einer Längsachse der Fahrradnabenbaugruppe (1) relativ zu dem Nabenkörper (12) verschieblich positioniert ist, in kraftübertragendem Kontakt geratbar angeordnet ist.

3. Fahrradnabenbaugruppe (1) nach Anspruch 2, **dadurch gekennzeichnet, dass** sich die einander zugewandten Zahnoberflächen zu 85% bis vorzugsweise 100% beim Ineinandergreifen der Zähne (37 und 39) der ersten und zweiten Zahnscheiben (38 und 40) berühren und/oder die sich zugewandten Zahnoberflächen ballig oder konvex ausgestaltet sind.

4. Fahrradnabenbaugruppe (1) nach einem der Ansprüche 2 und 3, **dadurch gekennzeichnet, dass** die Stirnverzahnung der ersten Zahnscheibe (38) form- und/oder stoffschlüssig mit dem Rotor (10) verbunden ist.

5. Fahrradnabenbaugruppe (1) nach einem der Ansprüche 1 bis 4, **dadurch gekennzeichnet, dass** der Rotor über zwei Wälzlager (8) auf der Achse (2) drehbar gelagert ist.

6. Fahrradnabenbaugruppe (1) nach einem der vorhergehenden Ansprüche, **dadurch gekennzeichnet, dass** die zusammenwirkenden Stirnverzahnungen nicht identisch zueinander sind.

7. Fahrradnabenbaugruppe nach einem der vorhergehenden Ansprüche, **dadurch gekennzeichnet, dass** in Gleitflächen (28) der Stirnverzahnung Öffnungen (34) eingebracht sind, die vorzugsweise als Durchgangslöcher der Bohrungen ausgebildet sind.

8. Fahrradnabenbaugruppe (1) nach einem der vorhergehenden Ansprüche, **dadurch gekennzeichnet, dass** der Rotor (10) aus einem Faserverbundwerkstoff, einer Aluminiumlegierung oder einem Magnesiumkern mit einem Aluminium-, Titan-, oder Stahllegierungsbelag aufgebaut ist.

9. Fahrradnabenbaugruppe (1) nach einem der vorhergehenden Ansprüche, **dadurch gekennzeichnet, dass** ein auf den Rotor (10) aufschiebbarer Zahnkranz und/oder die Stirnverzahnung zumindest abschnittsweise eine Metallbeschichtung auf der Oberfläche aufweist oder einen Metalleinsatz aufweist.

10. Fahrradnabenbaugruppe (1) nach einem der vorhergehenden Ansprüche, **dadurch gekennzeichnet, dass** die Fahrradnabenbaugruppe (1) eine hohle Achse (2) aus Faserverbundwerkstoff aufweist, an deren zumindest einem Ende (4) ein Ausfallendengegenstück (7) aufgesteckt ist und wobei auf der Achse (2) zumindest ein Wälzlager (8) positioniert ist und zwischen dem Wälzlager (8) und der Achse (2) eine von dem Ausfallendengegenstück (7) separate Metallisierung (9) aufgebracht ist, wobei die Metallisierung (9) eine metallische Beschichtung ist und/oder die Metallisierung (9) durch eine metallische Hülse ausgebildet ist, wobei die Hülse vorzugsweise zumindest abschnittsweise plan zur Oberfläche der Achse (2) in diese eingearbeitet ist.

11. Fahrradnabenbaugruppe (1) nach Anspruch 10, **dadurch gekennzeichnet, dass** die Hülse an einer Schulter (3) der Achse (2) anliegt, wobei die Schulter (3) durch eine plötzliche Außendurchmesservariation der Achse (2) erzeugt ist.

12. Fahrradnabenbaugruppe (1) nach einem der vorhergehenden Ansprüche, **dadurch gekennzeichnet, dass** die zweite Zahnscheibe (40) eine Profilierung (31) nach Art einer Geradverzahnung auf der Außenseite aufweist und/oder die Profilierung (31) in einem im Nabenkörper (12) wechselbar befestigten, vorzugsweise geschraubten, Zahnring (33) in Längsrichtung beweglich gelagert ist, wobei der Zahnring (33) aus härterem Material als der Rotor (10) und die erste Zahnscheibe (38) gefertigt ist.

13. Fahrrad mit einem Hinter- und/oder Vorderrad, in das eine Fahrradnabenbaugruppe nach einem der vorhergehenden Ansprüche eingebaut ist.

## Claims

1. Bicycle wheel hub assembly (1) comprising a rotor (10), which is rotatably arranged on an axle (2), and an axially displaceable free-wheeling device (11) by means of which force is transferrable from the rotor (10) to a hub body (12) in just one direction of rotation about the axle (2), the rotor (10) having an end-face toothing at its end facing the hub body (12), **characterised in that** the end-face toothing is formed on an integral flange (22) projecting radially from the rotor (10).

2. Bicycle wheel hub assembly (1) according to claim 1, **characterised in that** a first toothed disc (38), of the rotor (10), having an end-face toothing is arranged such that it can be brought into force-transmitting contact with a second toothed disc (40) which has an end-face toothing and is displaceably positioned relative to the hub body (12).

3. Bicycle wheel hub assembly (1) according to claim 2, **characterised in that** the mutually facing toothed surfaces are in contact at 85 % to preferably 100 % when the teeth (37 and 39) of the first and second toothed discs (38 and 40) are engaged and/or the mutually facing toothed surfaces are crowned or convex.

4. Bicycle wheel hub assembly (1) according to either claim 2 or claim 3, **characterised in that** the end-face toothing of the first toothed disc (38) interlocks with and/or is integrally bonded to the rotor (10).

5. Bicycle wheel hub assembly (1) according to any of claims 1 to 4, **characterised in that** the rotor is rotatably mounted on the axle (2) by means of two rolling bearings (8).

6. Bicycle wheel hub assembly (1) according to any of the preceding claims, **characterised in that** the cooperating end-face toothings are not identical to each other.

7. Bicycle wheel hub assembly according to any of the preceding claims, **characterised in that** openings (34) are incorporated into sliding surfaces (28) of the end-face toothing and preferably formed as drilled through-holes.

8. Bicycle wheel hub assembly (1) according to any of the preceding claims, **characterised in that** the rotor (10) is constructed from a fibrous composite material, an aluminium alloy or a magnesium core having an aluminium, titanium or steel alloy coating.

9. Bicycle wheel hub assembly (1) according to any of the preceding claims, **characterised in that** a sprocket that can be slid onto the rotor (10) and/or the end-face toothing has/have either a metal coating on at least some portions of the surface or a metal insert.

10. Bicycle wheel hub assembly (1) according to any of the preceding claims, **characterised in that** the bicycle wheel hub assembly (1) has a hollow axle (2) of fibrous composite material, on the at least one end (4) of which a dropout counter piece (7) is fitted, at least one rolling bearing (8) being positioned on the axle (2) and a metal coat (9), which is separate from the dropout counter piece (7), being applied between the rolling bearing (8) and the axle (2), the metal coat (9) being a metal coating and/or the metal coat (9) being formed by a metal sleeve, the sleeve being incorporated into the surface of the axle (2), preferably in a planar manner thereto at least in some portions.

11. Bicycle wheel hub assembly (1) according to claim 10, **characterised in that** the sleeve rests on the shoulder (3) of the axle (2), the shoulder (3) being produced by a sudden change in the outer diameter of the axle (2).

12. Bicycle wheel hub assembly (1) according to any of the preceding claims, **characterised in that** the second toothed disc (40) has a profile (31) on the outer side in the manner of a straight toothing and/or the profile (31) is mounted so as to move longitudinally in an annular gear (33) which is removably fastened, preferably screwed, in the hub shell (12), the annular gear (33) being produced from a more rigid material than the rotor (10) and the first toothed disc (38).

13. Bicycle comprising a rear and/or front wheel, into which bicycle a bicycle wheel hub assembly according to any of the preceding claims is incorporated.

## Revendications

1. Ensemble de composants d'un moyeu de bicyclette (1), comportant un rotor (10) monté rotatif sur un axe (2) et comportant un dispositif à roue libre (11), qui est apte à coulisser dans le sens axial et par lequel la force du rotor (10) peut être transmise sur un corps de moyeu (12) dans un seul sens de rotation autour de l'axe (2), le rotor (10) comportant une denture frontale à son extrémité orientée vers le corps de moyeu (12), **caractérisé en ce que** ladite denture frontale est réalisée sur une flasque (22) intégrale, en saillie radiale sur le rotor (10).

2. Ensemble de composants d'un moyeu de bicyclette (1) selon la revendication 1, **caractérisé en ce qu'**un premier disque denté (38) du rotor (10), comportant une denture frontale, est disposé de manière à entrer en contact avec transmission de force avec un deuxième disque denté (40), muni d'une denture frontale et positionné de manière à pouvoir coulisser par rapport au corps de moyeu (12) le long d'un axe longitudinal de l'ensemble de composants d'un moyeu de bicyclette (1).

3. Ensemble de composants d'un moyeu de bicyclette (1) selon la revendication 2, **caractérisé en ce que** les surfaces dentées orientées les unes vers les autres se touchent à 85 % jusqu'à de préférence 100 % au moment de l'engrènement des dents (37 et 39) du premier et deuxième disque denté (30 et 40) et/ou les surfaces dentées orientées les unes vers les autres sont bombées ou convexes.

4. Ensemble de composants d'un moyeu de bicyclette (1) selon les revendications 2 et 3, **caractérisé en ce que** la denture frontale du premier disque denté (38) est assemblée par conjugaison de forme et/ou par adhérence de matière avec le rotor (10).

5. Ensemble de composants d'un moyeu de bicyclette (1) selon l'une quelconque des revendications 1 à 4, **caractérisé en ce que** le rotor est monté rotatif sur l'axe (2) par l'intermédiaire de deux paliers à roulements (8).

6. Ensemble de composants d'un moyeu de bicyclette (1) selon l'une quelconque des revendications précédentes, **caractérisé en ce que** les dentures frontales coopérantes ne sont pas identiques.

7. Ensemble de composants d'un moyeu de bicyclette selon l'une quelconque des revendications précédentes, **caractérisé en ce que** dans les surfaces de glissement (28) de la denture frontale sont ménagés des orifices (34) qui sont réalisés de préférence sous forme de trous débouchant des forures.

8. Ensemble de composants d'un moyeu de bicyclette (1) selon l'une quelconque des revendications précédentes, **caractérisé en ce que** le rotor (10) est réalisé dans un matériau composite renforcé par des fibres, dans un alliage d'aluminium ou dans un noyau de magnésium avec un revêtement en aluminium, en titane ou en alliage d'acier.

9. Ensemble de composants d'un moyeu de bicyclette (1) selon l'une quelconque des revendications précédentes, **caractérisé en ce qu'**une couronne dentée, propre à être emmanchée sur le rotor (10), et/ou la denture frontale comportent au moins par zones un revêtement métallique sur la surface ou comportent un insert en métal.

10. Ensemble de composants d'un moyeu de bicyclette (1) selon l'une quelconque des revendications précédentes, **caractérisé en ce que** ledit ensemble de composants d'un moyeu de bicyclette (1) comporte un axe (2) creux réalisé dans un matériau composite renforcé par des fibres, sur ladite au moins une extrémité (4) duquel est emmanché un pendant émergent (7), et au moins un palier à roulements (8) étant positionné sur l'axe (2) et une métallisation (9), séparée du pendant émergent (7), étant appliquée entre le palier à roulements (8) et l'axe (2), ladite métallisation (9) étant un revêtement métallique et/ou ladite métallisation (9) étant formée par une gaine métallique, ladite gaine étant incorporée, de préférence au moins par zones de manière plane à la surface de l'axe (2), dans ladite surface.

11. Ensemble de composants d'un moyeu de bicyclette (1) selon la revendication 10, **caractérisé en ce que** la gaine est en appui contre un épaulement (3) de l'axe (2), ledit épaulement (3) étant formé par une brusque variation du diamètre extérieur de l'axe (2).

12. Ensemble de composants d'un moyeu de bicyclette (1) selon l'une quelconque des revendications précédentes, **caractérisé en ce que** le deuxième disque denté (40) comporte sur la face extérieure un profilage (31) à la manière d'une denture droite et/ou le profilage (31) est monté mobile dans le sens longitudinal dans une bague dentée (33) fixée de manière amovible, de préférence vissée, dans le corps de moyeu (12), ladite bague dentée (33) étant réalisée dans un matériau plus dur que celui du rotor (10) et du premier disque denté (38).

13. Bicyclette avec une roue arrière et/ou avant, dans laquelle est incorporé un ensemble de composants d'un moyeu de bicyclette selon l'une quelconque des revendications précédentes.
